# EUROPÄISCHE PATENTSCHRIFT

(11) **EP 4 167 447 B1**
(45) Veröffentlichungstag und Bekanntmachung des Hinweises auf die Patenterteilung: **08.07.2026**
(21) Anmeldenummer: 21202897.1
(22) Anmeldetag: 15.10.2021
(51) Int. Cl.: H02K 9/02, H02K 7/18, H02K 5/20, F03D 9/25, F03D 80/60, G10K 11/16

(54) **GENERATOR UND WINDENERGIEANLAGE**
GENERATOR AND WIND TURBINE
GÉNÉRATEUR ET ÉOLIENNE

(43) Veröffentlichungstag der Anmeldung: 19.04.2023
(73) Patentinhaber: Wobben Properties GmbH, 26607 Aurich (DE)
(72) Erfinder: Enskonatus, Kai, Hinte (DE); Müller, Michael, Wiegboldsbur (DE); Philipp, Alexander, Reilingen (DE)
(74) Vertreter: Eisenführ Speiser

(56) Entgegenhaltungen:
- EP-A1- 3 562 002
- DE-A1- 102014 208 791
- FR-A1- 2 280 235
- GB-A- 2 147 948
- JP-A- 2000 089 766
- JP-A- 2005 110 359
- US-A- 5 317 224
- US-B2- 10 495 068

## Beschreibung

Die Erfindung betrifft einen Generator, insbesondere einen Generator für eine Windenergieanlage. Ferner betrifft die Erfindung eine Windenergieanlage.

Windenergieanlagen emittieren im Betrieb Schall. Grund hierfür sind beispielsweise Verwirbelungen des Windes an den Rotorblättern der Windenergieanlagen. Auch Aggregate innerhalb von Windenergieanlagen stellen im Betrieb mögliche Schallquellen dar. Eine wesentliche Schallquelle sind beispielsweise Kühlvorrichtungen, die etwa zur Kühlung eines (elektrischen) Generators von Windenergieanlagen einen Luftstrom erzeugen. Durch die Förderung und Umlenkung des Luftstroms innerhalb des Generators, insbesondere durch schmale Spalte und dergleichen, entstehen auch hierbei regelmäßig Verwirbelungen, die Schall emittieren.

Den Schall nehmen Menschen und Tiere in einem bestimmten Frequenzbereich als Geräusch mit einer bestimmten Lautstärke wahr. Die Lautstärke ist durch den Schalldruckpegel charakterisiert. Zum Schutz von Menschen und Tieren dürfen Windenergieanlagen im Betrieb eine bestimmte Lautstärke (Grenzwert) aufgrund gesetzlicher Vorgaben nicht überschreiten. Der zulässige Grenzwert, den eine Windenergieanlage nicht überschreiten darf, hängt üblicherweise vom Standort der Windenergieanlage ab, an dem diese betrieben wird. Beispielsweise ist der Grenzwert in der Nähe von Ortschaften in der Regel geringer als abseits von Ortschaften.

Um den Wirkungsgrad von Windenergieanlagen zu verbessern, nimmt die Nabenhöhe und der Durchmesser des aerodynamischen Rotors von Windenergieanlagen immer weiter zu. Bei größeren Windenergieanlagen nimmt allerdings die Schallausbreitung und insoweit auch die Schallimmission zu. Ferner kann mit der zunehmenden Größe der Windenergieanlagen in aller Regel auch deren Schallemission zunehmen. Ursache hierfür kann der höhere Bedarf an Kühlleistung zur Kühlung des Generators sein, da größere oder mehr Kühlvorrichtungen, beispielsweise Ventilatoren, erforderlich werden können, die einen Luftstrom mit der erforderlichen Kühlleistung bereitstellen können. Die weltweit steigende Durchschnittstemperatur verstärkt den Bedarf nach zusätzlicher Kühlleistung. Dies ist beispielsweise aus US 10,495,068 B2, EP 3 562 002 A1, DE 10 2014 208 791 A1, JP2000-089766A, GB 2 147 948 A, FR 2 280 235, JP 2005-110359 oder US 5,137,224 bekannt.

Es ist daher eine Aufgabe, einen Generator, insbesondere einen Generator für eine Windenergieanlage, und eine Windenergieanlage bereitzustellen, die einen oder mehrere der genannten Nachteile existierender Lösungen vermindern oder beseitigen.

Gemäß einem ersten Aspekt wird diese Aufgabe gelöst durch einen Generator nach Anspruch 1.

Der Generator ist insbesondere ein Generator für eine Windenergieanlage. Vorzugsweise ist der Generator als Außenläufer ausgebildet. Der Generator ist insbesondere ein elektrischer Generator. Insbesondere weist der Generator einen Rotor und einen Stator auf, wobei der Rotor relativ zu dem Stator um eine Drehachse drehbar gelagert ist. Vorzugsweise ist der Stator innerhalb des Rotors angeordnet. Es kann auch bevorzugt sein, dass der Rotor innerhalb des Stators angeordnet ist.

Vorzugsweise erstreckt sich der Generator in Axialrichtung mit einer Generatorbreite. Die Axialrichtung entspricht dabei vorzugsweise der Richtung entlang der Drehachse des Generators. Orthogonal zu der Axialrichtung in Radialrichtung erstreckt sich der Generator bevorzugt mit einem Generatordurchmesser.

Der Generator weist ein Generatorgehäuse mit einer Innenseite und einer der Innenseite gegenüberliegenden Außenseite auf. Die Innenseite ist einem Generatorinnenraum des Generators zugewandt. Die Außenseite ist einer Umgebung des Generators zugewandt. Insbesondere grenzt das Generatorgehäuse den sich innerhalb des Generatorgehäuses erstreckenden Generatorinnenraum von der sich außerhalb des Generatorgehäuses befindenden Umgebung räumlich ab.

Der Generator weist ferner mindestens einen Luftauslasskanal auf. Der Luftauslasskanal erstreckt sich zwischen der Innenseite und der Außenseite. Dabei verbindet der mindestens eine Luftauslasskanal den Generatorinnenraum strömungstechnisch mit der Umgebung. Vorzugsweise weist der Generator mehrere Luftauslasskanäle auf. Insbesondere sind die mehreren Luftauslasskanäle in Umfangsrichtung des Generators äquidistant angeordnet.

Der mindestens eine Luftauslasskanal ist als Durchgangsöffnung ausgebildet. Der mindestens eine Luftauslasskanal kann beispielsweise rohrförmig oder schlauchförmig ausgebildet sein. Ferner kann der mindestens eine Luftauslasskanal als Leitung ausgebildet sein. Hierzu erstreckt sich der mindestens eine Luftauslasskanal in bevorzugter Weise durch das Generatorgehäuse hindurch. Vorzugsweise erstreckt sich der der mindestens eine Luftauslasskanal im Wesentlichen in Axialrichtung.

Durch den mindestens einen Luftauslasskanal lässt sich die Kühlungsluft aus dem Generator gezielt abführen. Insbesondere ermöglicht der mindestens eine Luftauslasskanal eine gezielte Führung der Kühlungsluft innerhalb des Generators.

Der Generator weist ferner mindestens einen Schalldämpfer auf, der an dem Generator angeordnet ist. Der mindestens eine Schalldämpfer weist in bevorzugter Weise in der Axialrichtung eine Haupterstreckungsrichtung auf.

Durch den Einsatz von Schalldämpfern am Generator lässt sich die Schallemission eines solchen Generators und insofern auch von einer Windenergieanlage mit einem solchen Generator erheblich minimieren. Die Schalldämpfer haben insbesondere den Effekt, dass bei gleichbleibender Leistung des Generators bzw. der Windenergieanlage der Schall reduziert wird. Ferner haben die Schalldämpfer in bevorzugter Weise den Effekt, dass bei steigender Leistung des Generators bzw. der Windenergieanlage die Schallemission zumindest gleichbleibt. Dies ermöglicht in vorteilhafter Weise, den Betrieb von Generatoren bzw. von Windenergieanlagen mit solchen Generatoren mit einer höheren Leistung ohne den Abstand zu Ortschaften zu vergrößern. Ferner lassen sich solche Generatoren bzw. Windenergieanlagen mit solchen Generatoren im Vergleich zu herkömmlichen Generatoren in bevorzugter Weise mit einem geringeren Abstand zu Ortschaften betreiben. Die Schalldämpfer können insbesondere standortabhängig ausgelegt werden.

Mit dem Generator bzw. mit Windenergieanlagen mit solchen Generatoren lassen sich (die zunehmend restriktiveren) Emissionsschutzrichtlinien einhalten. Insbesondere können die Generatoren bzw. Windenergieanlagen mit Schalldämpfern versehen werden, die den standortabhängigen Emissionsgrenzwerten genügen.

Insbesondere hat der Generator bzw. die Windenergieanlage aufweisend einen solchen Generator den Vorteil, dass der Generator bzw. die Windenergieanlage nicht in einen reduzierten Betriebsmodus gefahren werden muss, um Emissionsgrenzwerte einzuhalten, wie dies bei herkömmlichen Generatoren bzw. Windenergieanlagen mit herkömmlichen Generatoren häufig der Fall sein kann.

Bei einer bevorzugten Fortbildung des Generators ist vorgesehen, dass der mindestens eine Schalldämpfer lösbar an dem Generator angeordnet ist.

Die lösbare Anordnung des mindestens einen Schalldämpfers an dem Generator kann durch eine formschlüssige und/oder kraftschlüssige und/oder stoffschlüssige Verbindung realisiert werden. Als formschlüssige Verbindung kann beispielsweise eine Dreh- und/oder Schnappverbindung in Betracht kommen. Eine kraftschlüssige Verbindung kann beispielsweise durch eine Schraubverbindung realisiert sein. Eine Klebeverbindung kann beispielsweise als stoffschlüssige Verbindung vorgesehen sein.

Die lösbare Anordnung des mindestens einen Schalldämpfers an dem Generator hat den Vorteil, dass der mindestens eine Schalldämpfer besonders einfach und schnell gewechselt werden kann. Insbesondere hat dies den Vorteil, dass der Generator bzw. die Windenergieanlage aufweisend einen solchen Generator besonders einfach und schnell mit Schalldämpfern ausgestattet werden können, die den (standortabhängigen) Emissionsgrenzwerten am Standort des Betriebs genügen. Insbesondere lassen sich solche Generatoren bzw. die Windenergieanlagen ohne großen Aufwand mit Schalldämpfern nachrüsten, die auch zukünftigen Emissionsrichtlinien mit strengeren Grenzwerten genügen können.

Der mindestens eine Schalldämpfer ist an dem mindestens einen Luftauslasskanal angeordnet. Insbesondere kann eine Anordnung des mindestens einen Schalldämpfers an dem mindestens einen Luftauslasskanal eine Anordnung innerhalb des Luftauslasskanals umfassen. Es kann bevorzugt sein, dass der Schalldämpfer sich teilweise innerhalb des Luftauslasskanals erstreckt. Insbesondere kann bevorzugt sein, dass der Schalldämpfer sich vollständig durch den Luftauslasskanal erstreckt.

Diese Anordnung ermöglicht eine besonders platzsparende und effiziente Dämpfung des emittierten Schalls. Insbesondere ermöglicht diese Ausführungsform den Einsatz standardisierter Schalldämpfer. Hierdurch lassen sich besonders kostengünstige Lösungen realisieren.

Der mindestens eine Schalldämpfer erstreckt sich durch den mindestens einen Luftauslasskanal hindurch, wobei bevorzugt ist, dass der mindestens eine Schalldämpfer sich über die Außenseite hinaus erstreckt.

Der mindestens eine Schalldämpfer, der sich über die Außenseite hinaus erstreckt, erstreckt sich insbesondere in die Umgebung des Generators hinein. Ferner kann bevorzugt sein, dass der mindestens eine Schalldämpfer sich über die Innenseite hinaus erstreckt. Der mindestens eine Schalldämpfer, der sich überdie Innenseite hinaus erstreckt, erstreckt sich insbesondere in den Generatorinnenraum des Generators hinein.

Diese bevorzugte Ausführungsform ermöglicht, den mindestens einen Schalldämpfer in Abhängigkeit der am Standort des Generators bzw. der Windenergieanlage geltenden Emissionsgrenzwerte hinsichtlich seiner Dämpfungseigenschaften "einzustellen". Ist eine vergleichsweise hohe Schalldämpfung erforderlich, kann ein längerer Schalldämpfer vorgesehen werden; reicht hingegen eine vergleichsweise geringe Schalldämpfung aus, kann ein kürzerer Schalldämpfer vorgesehen werden. Insbesondere lassen sich solche Generatoren und entsprechende Windenergieanlagen mit entsprechenden Schalldämpfern nachrüsten, die zukünftig strengeren Schallemissionsgrenzwerten genügen.

Der mindestens eine Schalldämpfer weist einen Rohrschalldämpfer und/oder einen Kulissenschalldämpfer und/oder schalldämpfende Elemente auf.

Der Einsatz derart ausgebildeter Schalldämpfer ist besonders kostengünstig, da diese auf Standardbauteilen beruhen können. Ferner hat dies den Vorteil, dass derart ausgebildete Schalldämpfer gut verfügbar sind und somit auch kurzfristig beschafft werden können. Hierdurch lässt sich verhindern, dass Generatoren bzw. Windenergieanlagen für eine längere Zeit ausgeschaltet oder in einem reduzierten Betrieb betrieben werden müssen, um die Schallemissionsgrenzwerte einzuhalten.

Ferner weist der Generator in einer weiteren bevorzugten Fortbildung eine Absperreinheit auf. Eine solche Absperreinheit kann einteilig oder mehrteilig ausgebildet sein. Ferner kann bevorzugt sein, dass die Absperreinheit eine mechanisch betätigte Absperreinheit und/oder eine motorisch betätigte Absperreinheit ist.

Die Absperreinheit hat den Effekt, dass Umwelteinflüsse aus der Umgebung, beispielsweise Regenwasser, Staub etc. im Betriebsruhestand des Generators bzw. der Windenergieanlage nicht in den Generatorinnenraum gelangen. Insofern hat die Absperreinheit den Vorteil, dass der Generator bzw. die Windenergieanlage weniger verschmutzen und die Wahrscheinlichkeit für einen Ausfall des Generators bzw. der Windenergieanlage sinkt. Ferner hat diese Ausführungsform den Vorteil, dass die Wartung und Instandhaltung im Vergleich zu Generatoren ohne solch eine Absperreinheit in größeren Intervallen erfolgen kann. Hierdurch können die Betriebskosten solcher Generatoren sinken.

Nach einer weiteren bevorzugten Ausführungsform des Generators ist die Absperreinheit zwischen einer Offenstellung und einer von der Offenstellung verschiedenen Sperrstellung veränderbar. Insbesondere kann die Absperreinheit ausgebildet sein, dass diese sich während des Betriebs des Generators in der Offenstellung befindet. Die Absperreinheit kann mechanisch oder motorisch betätigt in der Offenstellung positioniert werden.

Bei einer mechanisch betätigten Absperreinheit kann beispielsweise die erwärmte Kühlungsluft, die aus dem Generator hinausströmt, die Absperreinheit in der Offenstellung positionieren. Strömt hingegen die erwärmte Kühlungsluft nicht mehr aus dem Generatorinnenraum in die Umgebung des Generators hinaus, wird die Absperreinheit in der Sperrstellung positioniert. Ferner kann bevorzugt sein, dass die Absperreinheit während des Betriebs des Generators durch einen Antrieb in der Offenstellung positioniert wird und der Antrieb die Absperreinheit in der Sperrstellung positioniert, wenn der Generator nicht mehr gekühlt wird.

Dies hat den Vorteil, dass der Luftwiederstand durch die Absperreinheit in der Offenstellung im Betrieb gering ist und der Generator bzw. der Generatorinnenraum im Betriebsruhestand durch die Absperreinheit in der Sperrstellung vor Umwelteinflüssen geschützt ist.

Weiterhin ist in einer bevorzugten Fortbildung des Generators vorgesehen, dass die Absperreinheit eine Jalousieklappe oder eine Rohrklappe ist. Dies hat den Vorteil, dass Standardbauteile als Absperreinheit eingesetzt werden können. Dies hat den Vorteil, dass derart ausgebildete Absperreinheiten gut verfügbar sind und somit auch kurzfristig beschafft werden können.

Nach einer weiteren bevorzugten Ausführungsform des Generators ist der mindestens eine Luftauslasskanal zylinderförmig oder polygonal ausgebildet. Insbesondere ist der mindestens eine Luftauslasskanal zylinderförmig ausgebildet, wenn als Schalldämpfer Rohrschalldämpfer vorgesehen sind. Ferner ist bevorzugt, dass der mindestens eine Luftauslasskanal polygonal ausgebildet ist, wenn als Schalldämpfer Kulissenschalldämpfer vorgesehen sind.

Ferner weist der Generator in einer bevorzugten Fortbildung eine Druckraumkammer auf, die mit dem mindestens einen Luftauslasskanal strömungstechnisch verbunden ist. Vorzugsweise ist die Druckraumkammer ringförmig ausgebildet. Insbesondere ist die Druckraumkammer ausgebildet, die erwärmte Kühlungsluft auf den mindestens einen Luftauslasskanal aufzuteilen. Insbesondere bei Generatoren mit mehreren Luftauslasskanälen ist die Druckraumkammer ausgebildet, die erwärmte Kühlungsluft auf die Luftauslasskanäle gleichmäßig aufzuteilen.

Gemäß einer ferner bevorzugten Fortbildung des Generators weist der Generator mindestens eine Luftfördervorrichtung auf, welche mit dem mindestens einen Luftauslasskanal strömungstechnisch verbunden ist, wobei vorzugsweise die mindestens eine Luftfördervorrichtung mit dem mindestens einen Luftauslasskanal durch die Druckraumkammer strömungstechnisch verbunden ist. Insbesondere weist der Generator mehrere Luftfördervorrichtungen auf. Vorzugsweise sind mehrere Luftfördervorrichtungen in Umfangsrichtung des Generators äquidistant zueinander angeordnet.

Nach einer ferner bevorzugten Ausführungsform weist der Generator mindestens einen Lufteinlasskanal auf, der sich zwischen der Innenseite und der Außenseite erstreckt, wobei der mindestens eine Lufteinlasskanal den Generatorinnenraum strömungstechnisch mit der Umgebung verbindet. Vorzugsweise weist der Generator mehrere Lufteinlasskanäle auf. Insbesondere sind die mehreren Lufteinlasskanäle in Umfangsrichtung des Generators äquidistant angeordnet.

Der mindestens eine Lufteinlasskanal ist als Durchgangsöffnung ausgebildet. Der mindestens eine Lufteinlasskanal kann beispielsweise rohrförmig oder schlauchförmig ausgebildet sein. Ferner kann der mindestens eine Lufteinlasskanal als Leitung ausgebildet sein.

Hierzu erstreckt sich der mindestens eine Lufteinlasskanal in bevorzugter Weise durch das Generatorgehäuse hindurch. Vorzugsweise erstreckt sich der der mindestens eine Luftauslasskanal im Wesentlichen in Axialrichtung.

Durch den mindestens einen Lufteinlasskanal lässt sich die Kühlungsluft gezielt in den Generator führen. Insbesondere ermöglicht der mindestens einen Lufteinlasskanal eine gezielte Führung der Kühlungsluft innerhalb des Generators.

Insbesondere strömt im Betrieb des Generators als Kühlungsluft Luft aus der Umgebung durch den mindestens einen Lufteinlasskanal. Es kann bevorzugt sein, an dem mindestens einen Lufteinlasskanal einen Tropfenabscheider vorzusehen, um Feuchtigkeit, insbesondere Wassertropfen, von der in den Generator einströmenden Luft abzuscheiden. Ergänzend oder alternativ kann an dem mindestens einen Lufteinlasskanal ein Luftfilter angeordnet werden, der die in den Generator einströmende Luft von Partikeln reinigt. Der Luftfilter kann Grobfilter und/oder Feinfilter umfassen. Dies erhöht in besonders vorteilhafter Weise die Lebensdauer des Generators bzw. der Windenergieanlage.

Weiterhin ist nach einer bevorzugten Fortbildung des Generators vorgesehen, dass der Generator zwei Stirnseiten aufweist, zwischen denen sich der Generatorinnenraum des Generators in der Axialrichtung erstreckt. Der mindestens eine Luftauslasskanal ist an einer der beiden Stirnseiten des Generators angeordnet. Ergänzend oder alternativ ist der mindestens eine Lufteinlasskanal an einer der beiden Stirnseiten des Generators angeordnet. Vorzugsweise ist bei einer als Luvläufer ausgebildeten Windenergieanlage der mindestens eine Luftauslasskanal an der Stirnseite des Generators angeordnet, die in dem Betriebszustand des Generators die von den Rotorblättern abgewandte Stirnseite ist. Insbesondere ist der mindestens eine Luftauslasskanal an der Stirnseite des Generators angeordnet, die in dem Betriebszustand des Generators die vom Wind abgewandte Stirnseite ist. Ferner kann bei einer als Luvläufer ausgebildeten Windenergieanlage bevorzugt sein, dass der mindestens eine Lufteinlasskanal an der Stirnseite des Generators angeordnet ist, die in einem Betriebszustand des Generators die von den Rotorblättern abgewandte Stirnseite ist. Insbesondere ist der mindestens eine Lufteinlasskanal an der Stirnseite des Generators angeordnet, die in dem Betriebszustand des Generators die vom Wind abgewandte Stirnseite ist. Vorzugsweise ist im Betriebszustand bei einer als Luvläufer ausgebildeten Windenergieanlage die vom Wind abgewandte Stirnseite die von den Rotorblättern abgewandte Stirnseite des Generators.

Alternativ ist bei einer als Leeläufer ausgebildeten Windenergieanlage der mindestens eine Luftauslasskanal und/oder der mindestens eine Lufteinlasskanal vorzugsweise an der Stirnseite des Generators angeordnet, die in dem Betriebszustand des Generators die von den Rotorblättern zugewandte Stirnseite ist. Vorzugsweise ist im Betriebszustand bei einer als Leeläufer ausgebildeten Windenergieanlage die vom Wind abgewandte Stirnseite die von den Rotorblättern zugewandte Stirnseite des Generators.

Insbesondere ist bevorzugt, dass das Generatorgehäuse die zwei Stirnseiten aufweist. Insbesondere ist bevorzugt, dass eine der beiden oder beide Stirnseiten einteilig oder mehrteilig ausgebildet ist oder sind.

Dies hat den Vorteil, dass der Generator in Windrichtung keine Öffnungen aufweist, durch welche Wasser oder Schmutz eingetragen wird. Vielmehr liegen sowohl der mindestens eine Luftauslasskanal als auch der mindestens eine Lufteinlasskanal windgeschützt im Windschatten des Generatorgehäuses.

Ferner ist nach einer weiteren bevorzugten Ausführungsform des Generators vorgesehen, dass der Generator aufweist: einen Luftzuführkanal und eine Abluftkammer, insbesondere zwei oder mehrere Abluftkammern, die mit dem stromaufwärtsliegenden Luftzuführkanal strömungstechnisch verbunden ist, einen Rotor mit einer Rotoraktiveinheit und einen Stator mit einer Statoraktiveinheit, wobei die Rotoraktiveinheit und die Statoraktiveinheit mit einem Luftspalt beabstandet zueinander angeordnet sind, durch den die Abluftkammer mit dem stromaufwärtsliegenden Luftzuführkanal strömungstechnisch verbunden ist, wobei vorzugsweise die Luftfördervorrichtung stromabwärts der Abluftkammer angeordnet ist, die zur Kühlung der Rotoraktiveinheit und der Statoraktiveinheit ausgebildet ist, wobei die Luftfördervorrichtung zur Kühlung der Rotoraktiveinheit und der Statoraktiveinheit Kühlungsluft durch den Luftzuführkanal zu dem Luftspalt zuführt, und von der Rotoraktiveinheit und der Statoraktiveinheit erwärmte Kühlungsluft durch die Abluftkammer von dem Luftspalt abführt, wobei insbesondere der Luftzuführkanal mit dem mindestens einen Lufteinlasskanal strömungstechnisch verbunden ist.

Darüber hinaus wird die eingangs genannte Aufgabe gelöst durch eine Windenergieanlage, umfassend einen Generator wie vorstehend beschrieben.

Für weitere Vorteile, Ausführungsvarianten und Ausführungsdetails der weiteren Aspekte und ihrer möglichen Fortbildungen wird auch auf die zuvor erfolgte Beschreibung zu den entsprechenden Merkmalen und Fortbildungen des Generators verwiesen.

Bevorzugte Ausführungsbeispiele werden beispielhaft anhand der beiliegenden Figuren beschrieben. Es zeigen:
- Figur 1:: eine schematische, dreidimensionale Ansicht einer beispielhaften Ausführungsform einer Windenergieanlage;
- Figur 2:: eine Draufsicht einer bevorzugten Ausführungsform eines Generators;
- Figur 3:: eine Seitenansicht des in Figur 2 dargestellten Generators in der Draufsicht;
- Figur 4:: eine Schnittansicht des in Figur 3 dargestellten Generators in der Seitenansicht;
- Figur 5:: eine Detailansicht der in Figur 4 dargestellten Generators in der Schnittansicht; und
- Figur 6:: eine Schnittansicht einer weiteren bevorzugten Ausführungsform eines Generators.

In den Figuren sind gleiche oder im Wesentlichen funktionsgleiche Elemente mit den gleichen Bezugszeichen versehen. Allgemeine Beschreibungen beziehen sich in der Regel auf alle Ausführungsformen, sofern Unterschiede nicht explizit angegeben sind.

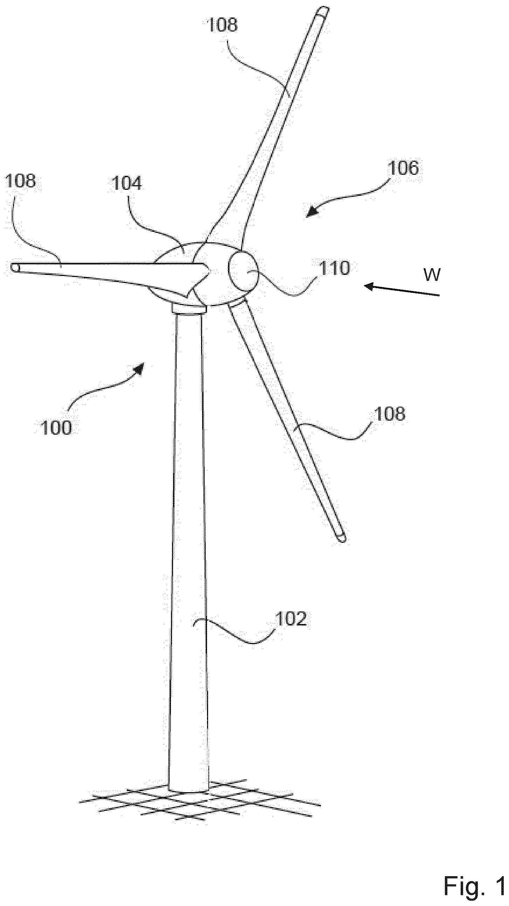

Die Erläuterung der Erfindung anhand von Beispielen unter Bezugnahme auf die Figuren erfolgt im Wesentlichen schematisch und die Elemente, die in der jeweiligen Figur erläutert werden, können darin zur besseren Veranschaulichung überzeichnet und andere Elemente vereinfacht sein. So veranschaulicht beispielsweise Figur 1 eine Windenergieanlage als solche schematisch, sodass der Generator im Detail nicht erkennbar ist.

Figur 1 zeigt eine schematische, dreidimensionale Ansicht einer Windenergieanlage 100. Die Windenergieanlage 100 weist einen Turm 102 und eine Gondel 104 auf dem Turm 102 auf. Der Turm 102 kann hierbei aus aneinander angeordneten Turmsegmenten bestehen. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage 100 durch den Wind W in eine Drehbewegung versetzt und dreht somit auch einen elektrodynamischen Rotor oder Läufer eines Generators 10, welcher direkt oder indirekt mit dem aerodynamischen Rotor 106 gekoppelt ist. Der Generator 10 ist in der Gondel 104 angeordnet und erzeugt elektrische Energie.

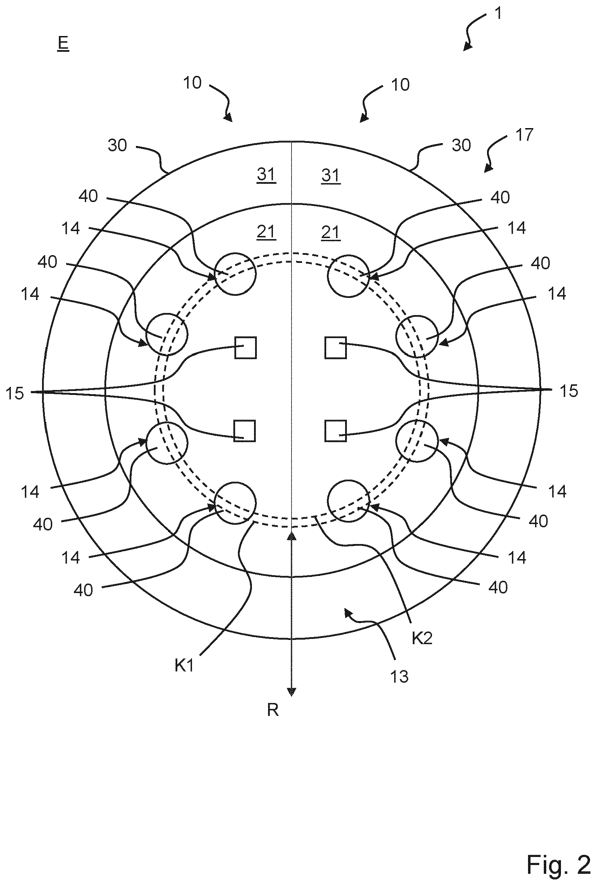

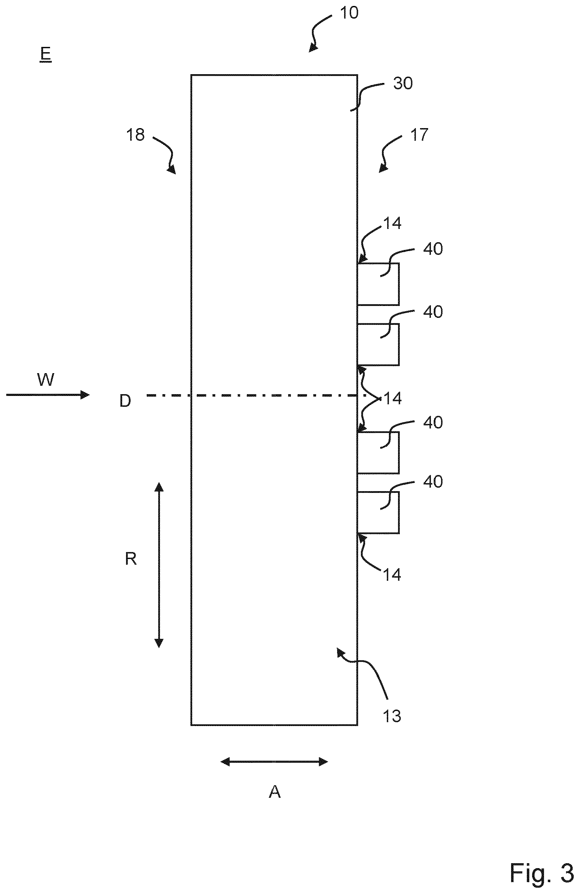

Figuren 2 und 3 zeigen eine bevorzugte Ausführungsform eines Generators 10 für eine solche Windenergieanlage 100 zur elektrischen Energieerzeugung. Figur 2 zeigt den Generator 10 in einer Draufsicht und Figur 3 zeigt den Generator 10 in einer Seitenansicht. Der Generator 10 ist in dieser bevorzugten Ausführungsform als Außenläufer ausgebildet.

Der Generator 10 weist ein Generatorgehäuse mit einer Außenseite 13 auf, die einer Umgebung E des Generators 10 zugewandt ist. Ferner weist der Generator 10 eine Innenseite 12 (in Figuren 2 und 3 nicht dargestellt) auf, die einem Generatorinnenraum 16 (in Figuren 2 und 3 nicht dargestellt) zugewandt ist und der Außenseite 13 gegenüberliegt. Der Generatorinnenraum 16 ist in Axialrichtung A durch zwei Stirnseiten 17, 18, einer im Betriebszustand vom Wind W abgewandten Stirnseite (windabgewandte Stirnseite) und einer im Betriebszustand dem Wind W zugewandten Stirnseite 18 (windzugewandte Stirnseite), räumlich begrenzt. In der vorliegenden Ausführungsform bilden beispielsweise ein Rotor-Leeverkleidungselement 31 und ein Stator-Verkleidungselement 21 die windabgewandte Stirnseite 17 und ein Rotor-Luvverkleidungselement 32 die windzugewandte Stirnseite 18. Die beiden Stirnseiten 17, 18 weisen jeweils eine Innenseite 12 und eine Außenseite 13 auf.

Der Generator 10 weist acht Luftauslasskanäle 14 und vier Lufteinlasskanäle 15 auf, die sich zwischen der Innenseite 12 und der Außenseite 13 erstrecken und den Generatorinnenraum 16 strömungstechnisch mit der Umgebung E verbinden. Dabei sind die Lufteinlasskanäle ausgebildet, dass Luft aus der Umgebung E in den Generatorinnenraum 16 gelangt. Die Luftauslasskanäle sind ausgebildet, dass Luft aus dem Generatorinnenraum 16 in die Umgebung E gelangt. Es ist zu erkennen, dass die in Figur 2 dargestellten zwei linken und zwei rechten Luftauslasskanäle auf einer Kreisbahn K1 und die zwei oberen und zwei unteren Luftauslasskanäle auf einer Kreisbahn K2, die von der Kreisbahn K1 verschieden ist, angeordnet sind.

Die Luftauslasskanäle 14 sind in der vorliegenden bevorzugten Ausführungsform zylinderförmig ausgebildet. Die Lufteinlasskanäle 15 sind in der vorliegenden bevorzugten Ausführungsform polygonal ausgebildet. Sowohl die Luftauslasskanäle 14 als auch die Lufteinlasskanäle 15 erstrecken sich im Wesentlichen in Axialrichtung A. Sowohl die Luftauslasskanäle 14 als auch die Lufteinlasskanäle 15 sind in dieser bevorzugten Ausführungsform des Generators an derselben Stirnseite angeordnet; hier an der windabgewandten Stirnseite 17 in dem Stator-Verkleidungselement 21 ausgebildet. Das heißt, die Luftauslasskanäle 14 und die Lufteinlasskanäle 15 sind an der Stirnseite 17 des Generator 10 angeordnet, die in dem Betriebszustand des Generators 10 die vom Wind W abgewandte Stirnseite 17 ist; sprich, die Luftauslasskanäle 14 und die Lufteinlasskanäle 15 befinden sich im Betriebszustand des Generators 10 an jener Stirnseite 10, die der Gondel 104 bzw. dem Maschinenhaus zugewandt ist.

An dem Generator 10 sind acht Schalldämpfer 40 lösbar angeordnet. Konkret ist je ein Schalldämpfer 40 an jeweils einem Luftauslasskanal 14 angeordnet. Die Schalldämpfer 40 sind an den Luftauslasskanälen 14 derart angeordnet, dass diese sich durch den jeweiligen Luftauslasskanal 14 hindurch erstrecken. Die Schalldämpfer 40 weisen in Axialrichtung A eine Länge auf, die es erfordert, dass die Schalldämpfer 40 sich über die Außenseite 13 hinaus, d.h. in die Umgebung E hinein, erstrecken. In der bevorzugten Ausführungsform sind die Schalldämpfer 40 als Rohrschalldämpfer ausgebildet. Es kann allerdings auch bevorzugt sein, Kulissenschalldämpfer als Schalldämpfer 40 vorzusehen. Ergänzend oder alternativ können an den Luftauslässen 14 auch schalldämpfende Elemente 40 angeordnet werden.

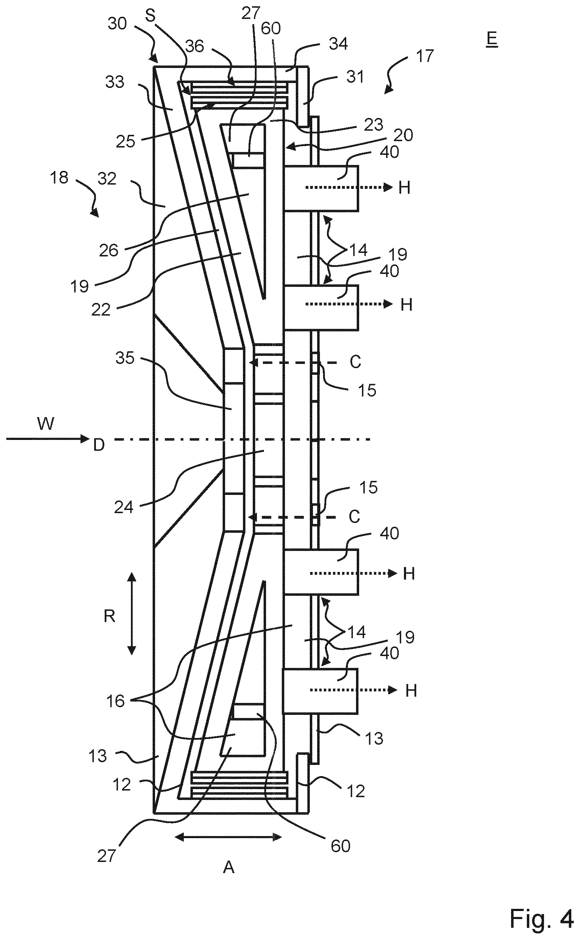

Figur 4 zeigt eine Schnittansicht des in den Figuren 2 und 3 dargestellten Generators 10. Diese Schnittansicht zeigt den Generatorinnenraum 16 des Generators 10 im Detail. Es ist zu erkennen, dass der Rotor 30 eine Rotoraktiveinheit 36 an einem Magnetträgersegment 34 aufweist, das über eine Rotortragstruktur 33 drehbar um eine Drehachse D gehalten wird. Ferner ist zu erkennen, dass der Stator 20 eine Statoraktiveinheit 25 an einem Spulenträgersegment 23 aufweist, das über eine Statortragstruktur 22 koaxial zu der Drehachse D angeordnet ist. Der Rotor 30 ist um die Drehachse D relativ zu dem Stator 20 drehbar angeordnet.

Rotor 30 und Stator 20 sind derart zueinander positioniert, dass die Rotoraktiveinheit 36 und die Statoraktiveinheit 25 mit einem Luftspalt S beanstandet zueinander angeordnet sind. Zur Kühlung des Generators 10 wird durch den Luftspalt S Kühlungsluft C hindurchgeführt wird. Dazu wird im Betrieb Kühlungsluft C durch einen Luftzuführkanal 19 zu dem Luftspalt S geführt, der mit den Lufteinlasskanälen 15 strömungstechnisch verbunden ist. Der Luftzuführkanal 19 ist dabei derart ausgebildet, dass die Kühlungsluft C in Bezug zu der Drehachse D im Wesentlichen in der Radialrichtung R nach außen in Richtung des Magnetträgersegments 34 geführt wird. Den Luftzuführkanal 19 bilden dabei der Rotor und der zum Rotor beabstandet angeordnete Stator. Insbesondere bilden den Luftzuführkanal 19 vorliegend einerseits die Rotortragstruktur 33 mit dem Rotor-Luvverkleidungselement 32 und die Statortragstruktur 22 und andererseits das Stator-Verkleidungselement 21 bzw. das Rotor-Leeverkleidungselement 31 und die Statortragstruktur 22.

Die von der Rotoraktiveinheit 36 und der Statoraktiveinheit 25 erwärmte Kühlungsluft H wird wiederum durch Abluftkammern 27 von dem Luftspalt S, der die Abluftkammern 27 mit dem stromaufwärtsliegenden Luftzuführkanal 19 strömungstechnisch verbindet, in Radialrichtung R nach innen abgeführt. Hierzu sind die Abluftkammern innerhalb des Stators 20 bzw. innerhalb der Statortragstruktur 22 des Stators 20 angeordnet. Die Abluftkammern 27 sind also ausgebildet, die erwärmte Kühlungsluft H in Bezug zu der Drehachse D im Wesentlichen in einer Radialrichtung R abzuführen.

Zur Förderung der Kühlungsluft C bzw. der erwärmten Kühlungsluft H durch den Generatorinnenraum 16 weist der Generator mehrere Luftfördervorrichtungen 60, beispielsweise Ventilatoren, auf, die durch eine Druckraumkammer 26 mit den Luftauslasskanälen 14 strömungstechnisch verbunden sind. Die Druckraumkammer 26 ist also zwischen den Luftauslasskanälen 14 und den Abluftkammern 27 bzw. den Luftfördervorrichtungen 60 angeordnet und verbindet die Abluftkammern 27 über die Luftfördervorrichtungen 60 strömungstechnisch mit den Luftauslasskanälen 14. Dazu sind die Luftfördervorrichtungen 60 stromabwärts der Abluftkammern 27 angeordnet.

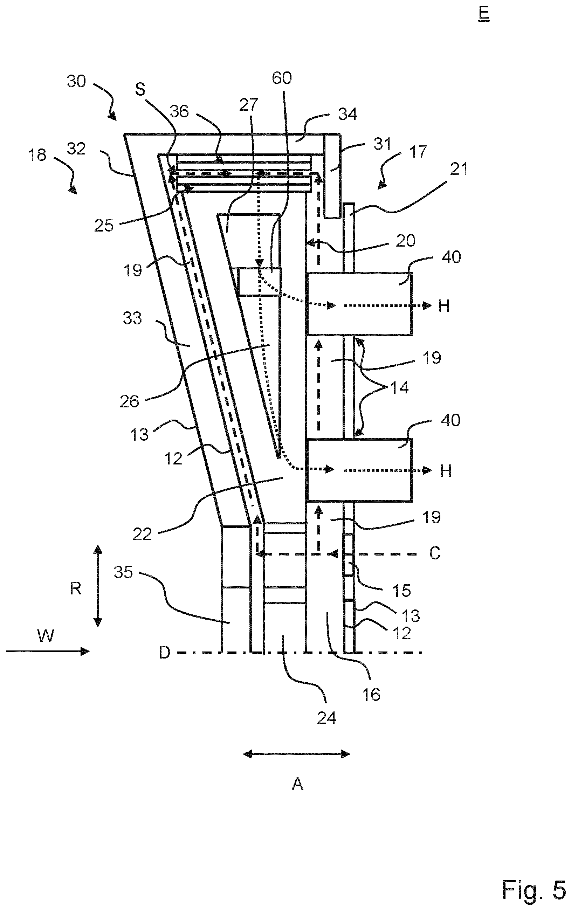

Figur 5 zeigt eine Detailansicht der in Figur 4 dargestellten Schnittansicht. Aus der Detailansicht von Figur 5 wird die Führung der Kühlungsluft C (gestrichelte Linie) und der erwärmten Kühlungsluft H (gepunktete Linie) deutlich. Es ist zu sehen, dass die Kühlungsluft C durch die Lufteinlasskanäle 15 in den Generatorinnenraum 16 eintritt und über die Luftzuführkanäle dem Luftspalt S zwischen den Aktiveinheiten 25, 36 zugeführt wird. Die stromabwärts des Luftspalts S innerhalb der Statortragstruktur 22 angeordneten Luftfördervorrichtung saugen die erwärmte Kühlungsluft H durch Abluftkammern 27 an und fördern die erwärmte Kühlungsluft H durch die Druckraumkammer 26 und durch die in den Luftauslasskanälen 14 angeordneten Schalldämpfer 40 in die Umgebung E.

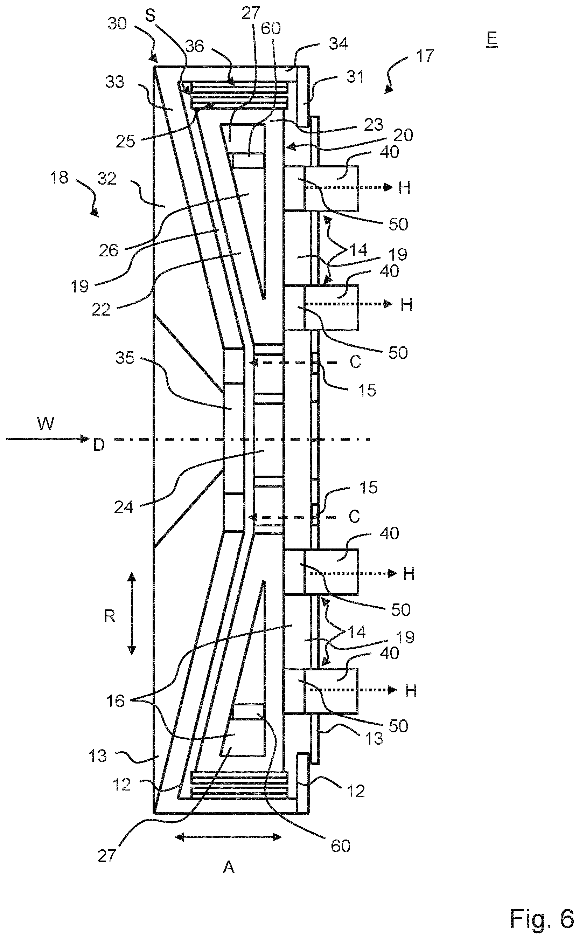

Figur 6 zeigt eine Schnittansicht einer weiteren bevorzugten Ausführungsform eines Generators 10. Diese weitere Ausführungsform beruht im Wesentlichen auf der in den Figuren 2 bis 5 dargestellten bevorzugten Ausführungsform des Generators 10.

Die in Figur 6 gezeigte Ausführungsform weist ferner mehrere Absperreinheiten 50 auf. Es ist hierbei vorgesehen, dass jeweils eine Absperreinheit 50 einem Luftauslasskanal 14 zugeordnet ist. Hierzu sind die Absperreinheiten innerhalb des Generatorinnenraums 16 in Strömungsrichtung vorgelagert zu den Schalldämpfern 40 angeordnet. Die Absperreinheiten 50 sind beispielsweise Jalousieklappen oder Rohrklappen, die zwischen einer Offenstellung und einer von der Offenstellung verschiedenen Sperrstellung veränderbar sind. In der Offenstellung verbinden die Absperreinheiten 50 die Druckraumkammer strömungstechnischen mit den Luftauslasskanälen 14 bzw. den Schalldämpfern 40. In der Sperrstellung verhindern die Absperreinheiten 50, dass Umwelteinflüsse, d.h. Schmutz, Regen oder dergleichen, aus der Umgebung E in den Generatorinnenraum 16 gelangen.

### Bezugszeichenliste

- 10: Generator
- 12: Innenseite
- 13: Außenseite
- 14: Luftauslasskanal
- 15: Lufteinlasskanal
- 16: Generatorinnenraum
- 17: windabgewandte Stirnseite
- 18: windzugewandte Stirnseite
- 19: Luftzuführkanal
- 20: Stator
- 21: Stator-Verkleidungselement
- 22: Statortragstruktur
- 23: Spulenträgersegment
- 25: Statoraktiveinheit bzw. Spuleneinheit
- 26: Druckraumkammer
- 27: Abluftkammer
- 30: Rotor
- 31: Rotor-Leeverkleidungselement
- 32: Rotor-Luvverkleidungselement
- 33: Rotortragstruktur
- 34: Magnetträgersegment
- 36: Rotoraktiveinheit bzw. Magneteinheiten
- 40: Schalldämpfer
- 50: Absperreinheit
- 60: Luftfördervorrichtung
- 100: Windenergieanlage
- 102: Turm
- 104: Gondel
- 106: aerodynamischer Rotor
- 108: Rotorblätter
- 110: Spinner
- A: Axialrichtung
- C: Kühlungsluft
- D: Drehachse
- E: Umgebung
- H: erwärmte Kühlungsluft, Warmluft
- K1,2: Kreisbahnen
- R: Radialrichtung
- S: Luftspalt
- W: Wind

## Patentansprüche

1. Generator (10), insbesondere Generator (10) für eine Windenergieanlage (100), der Generator (10) aufweisend:
- ein Generatorgehäuse aufweisend:
• eine Innenseite, die einem Generatorinnenraum (16) des Generators (10) zugewandt ist, und
• eine der Innenseite (12) gegenüberliegende Außenseite (13), die einer Umgebung (E) des Generators (10) zugewandt ist,
- mindestens einen Luftauslasskanal (14), der sich zwischen der Innenseite (12) und der Außenseite (13) erstreckt, wobei der mindestens eine Luftauslasskanal (14) den Generatorinnenraum (16) strömungstechnisch mit der Umgebung (E) verbindet, und
- mindestens ein Schalldämpfer (40) an dem Generator (10) angeordnet ist, **dadurch gekennzeichnet, dass**
- der mindestens eine Schalldämpfer (40) an dem mindestens einen Luftauslasskanal (14) angeordnet ist, wobei der mindestens eine Schalldämpfer (40) sich durch den mindestens einen Luftauslasskanal (14) hindurch erstreckt, und
- der mindestens eine Schalldämpfer (40) einen Rohrschalldämpfer (40) und/oder einen Kulissenschalldämpfer (40) aufweist.

2. Generator (10) nach dem vorhergehenden Anspruch 1, wobei der mindestens eine Schalldämpfer (40) lösbar an dem Generator (10) angeordnet ist.

3. Generator (10) nach einem der vorhergehenden Ansprüche 1 bis 2, wobei der mindestens eine Schalldämpfer (40) sich über die Außenseite (13) hinaus erstreckt.

4. Generator (10) nach einem der vorhergehenden Ansprüche 1 bis 3, wobei der mindestens eine Schalldämpfer (40) schalldämpfende Elemente aufweist.

5. Generator (10) nach einem der vorhergehenden Ansprüche 1 bis 4, aufweisend eine Absperreinheit (50).

6. Generator (10) nach dem vorhergehenden Anspruch 5, wobei die Absperreinheit (50) zwischen einer Offenstellung und einer von der Offenstellung verschiedenen Sperrstellung veränderbar ist.

7. Generator (10) nach einem der vorhergehenden Ansprüche 5 oder 6, wobei die Absperreinheit (50) eine Jalousieklappe oder eine Rohrklappe ist.

8. Generator (10) nach einem der vorhergehenden Ansprüche 1 bis 7, wobei der mindestens eine Luftauslasskanal (14) zylinderförmig oder polygonal ausgebildet ist.

9. Generator (10) nach einem der vorhergehenden Ansprüche 1 bis 8, aufweisend eine Druckraumkammer (26), die mit dem mindestens einen Luftauslasskanal (14) strömungstechnisch verbunden ist.

10. Generator (10) nach einem der vorhergehenden Ansprüche 1 bis 9, aufweisend mindestens eine Luftfördervorrichtung (60), welche mit dem mindestens einen Luftauslasskanal (14) strömungstechnisch verbunden ist,
wobei vorzugsweise die mindestens eine Luftfördervorrichtung (60) mit dem mindestens einen Luftauslasskanal (14) durch die Druckraumkammer (26) strömungstechnisch verbunden ist.

11. Generator (10) nach einem der vorhergehenden Ansprüche 1 bis 10, aufweisend mindestens einen Lufteinlasskanal (15), der sich zwischen der Innenseite (12) und der Außenseite (13) erstreckt, wobei der mindestens eine Lufteinlasskanal (15) den Generatorinnenraum (16) strömungstechnisch mit der Umgebung (E) verbindet.

12. Generator (10) nach einem der vorhergehenden Ansprüche 1 bis 11, aufweisend
- zwei Stirnseiten (17, 18), zwischen denen sich der Generatorinnenraum (16) des Generators (10) in einer Axialrichtung (A) erstreckt, wobei
• der mindestens eine Luftauslasskanal (14) an einer der beiden Stirnseiten (17, 18) des Generators angeordnet ist,
wobei vorzugsweise der mindestens eine Luftauslasskanal (14) an der Stirnseite (17, 18) des Generators (10) angeordnet ist, die in dem Betriebszustand des Generators (10) die vom Wind (W) abgewandte Stirnseite (17) ist,
und/oder
• der mindestens eine Lufteinlasskanal (15) an einer der beiden Stirnseiten (17, 18) des Generators (10) angeordnet ist,
wobei insbesondere der mindestens eine Lufteinlasskanal (15) an der Stirnseite (17, 18) des Generators angeordnet ist, die in einem Betriebszustand des Generators (10) die vom Wind (W) abgewandte Stirnseite (17) ist.

13. Generator (10) nach einem der vorhergehenden Ansprüche 1 bis 12, aufweisend
- einen Luftzuführkanal (19) und eine Abluftkammer (27), insbesondere zwei oder mehrere Abluftkammern, die mit dem stromaufwärtsliegenden Luftzuführkanal (19) strömungstechnisch verbunden ist,
- einen Rotor (30) mit einer Rotoraktiveinheit (36) und einen Stator (20) mit einer Statoraktiveinheit (25), wobei
- die Rotoraktiveinheit (36) und die Statoraktiveinheit (25) mit einem Luftspalt (S) beabstandet zueinander angeordnet sind, durch den die Abluftkammer (27) mit dem stromaufwärtsliegenden Luftzuführkanal (19) strömungstechnisch verbunden ist,
- wobei vorzugsweise die Luftfördervorrichtung (60) stromabwärts der Abluftkammer (27) angeordnet ist, die zur Kühlung der Rotoraktiveinheit (36) und der Statoraktiveinheit (25) ausgebildet ist, wobei die Luftfördervorrichtung (60) zur Kühlung der Rotoraktiveinheit (36) und der Statoraktiveinheit (25)
• Kühlungsluft (C) durch den Luftzuführkanal (19) zu dem Luftspalt (S) zuführt, und
• von der Rotoraktiveinheit (36) und der Statoraktiveinheit (25) erwärmte Kühlungsluft (H) durch die Abluftkammer (27) von dem Luftspalt abführt,
- wobei insbesondere der Luftzuführkanal (19) mit dem mindestens einen Lufteinlasskanal (15) strömungstechnisch verbunden ist.

14. Windenergieanlage, aufweisend einen Generator (10) nach einem der vorhergehenden Ansprüche 1-13.

## Claims

1. Generator (10), in particular a generator (10) for a wind turbine (100), the generator (10) comprising:
- a generator housing comprising:
• an inner side (12) facing a generator interior (16) of the generator (10), and
• an outer side (13) opposite the inner side (12), which faces an environment (E) of the generator (10),
- at least one air outlet channel (14) extending between the inner side (12) and the outer side (13), wherein the at least one air outlet channel (14) connects the generator interior (16) fluidically to the environment (E), and
- at least one silencer (40) is arranged on the generator (10),
**characterised in that**
- the at least one silencer (40) arranged on the at least one air outlet channel (14), wherein the at least one silencer (40) extends through the at least one air outlet channel (14), and
- the at least one silencer (40) comprises a tubular silencer (40) and/or a baffle silencer (40).

2. Generator (10) according to the preceding claim 1, wherein
the at least one silencer (40) is detachably arranged on the generator (10).

3. Generator (10) according to one of the preceding claims 1 to 2, wherein
the at least one silencer (40) extends beyond the outer side (13).

4. A generator (10) according to any one of the preceding claims 1 to 3, wherein
the at least one silencer (40) comprises sound-absorbing elements.

5. Generator (10) according to any one of the preceding claims 1 to 4, comprising a shut-off unit (50).

6. A generator (10) according to the preceding claim 5, wherein
the shut-off unit (50) is adjustable between an open position and a shut-off position different from the open position.

7. Generator (10) according to one of the preceding claims 5 or 6, wherein
the shut-off unit (50) is a louvre flap or a tubular flap.

8. Generator (10) according to one of the preceding claims 1 to 7, wherein
the at least one air outlet channel (14) is cylindrical or polygonal in shape.

9. Generator (10) according to any one of the preceding claims 1 to 8, comprising a pressure chamber (26) which is fluidically connected to the at least one air outlet channel (14).

10. Generator (10) according to any one of the preceding claims 1 to 9, comprising
at least one air conveying device (60) which is fluidically connected to the at least one air outlet channel (14),
wherein, preferably, the at least one air conveying device (60) is fluidically connected to the at least one air outlet channel (14) via the pressure chamber (26).

11. Generator (10) according to any one of the preceding claims 1 to 10, comprising at least one air inlet channel (15) extending between the inner side (12) and the outer side (13), wherein the at least one air inlet channel (15) fluidically connects the generator interior (16) to the environment (E).

12. Generator (10) according to any one of the preceding claims 1 to 11, comprising
- two end faces (17, 18), between which the generator interior (16) of the generator (10) extends in an axial direction (A), wherein
• the at least one air outlet channel (14) is arranged at one of the two end faces (17, 18) of the generator,
wherein preferably the at least one air outlet channel (14) is arranged on the end face (17, 18) of the generator (10) which, in the operating state of the generator (10), is the end face (17) facing away from the wind (W),
and/or
• the at least one air inlet channel (15) is arranged on one of the two end faces (17, 18) of the generator (10),
wherein, in particular, the at least one air inlet channel (15) is arranged on the end face (17, 18) of the generator which, in an operating state of the generator (10), is the end face (17) facing away from the wind (W).

13. Generator (10) according to any one of the preceding claims 1 to 12, comprising
- an air supply channel (19) and an exhaust air chamber (27), in particular two or more exhaust air chambers, which is fluidically connected to the upstream air supply channel (19),
- a rotor (30) with a rotor active unit (36) and a stator (20) with a stator active unit (25), wherein
- the rotor active unit (36) and the stator active unit (25) are arranged at a distance from one another with an air gap (S) between them, through which the exhaust air chamber (27) is fluidically connected to the upstream air supply channel (19),
- wherein preferably the air conveying device (60), which is designed to cool the rotor active unit (36) and the stator active unit (25), is arranged downstream of the exhaust air chamber (27), wherein the air conveying device (60) for cooling the rotor active unit (36) and the stator active unit (25)
• supplies cooling air (C) through the air supply channel (19) to the air gap (S), and
• discharges cooling air (H) heated by the rotor active unit (36) and the stator active unit (25) from the air gap via the exhaust air chamber (27),
- wherein, in particular, the air supply channel (19) is fluidically connected to the at least one air inlet channel (15).

14. Wind turbine comprising a generator (10) according to any one of the preceding claims 1-13.

## Revendications

1. Générateur (10), notamment générateur (10) pour une éolienne (100), le générateur (10) présentant :
- un boîtier de générateur présentant :
• un côté intérieur qui est tourné vers un espace intérieur (16) du générateur (10), et
• un côté extérieur (13) opposé au côté intérieur (12) qui est tourné vers un environnement (E) du générateur (10),
- au moins un canal de sortie d'air (14) qui s'étend entre le côté intérieur (12) et le côté extérieur (13), dans lequel l'au moins un canal de sortie d'air (14) relie l'espace intérieur (16) du générateur à l'environnement (E) sur le plan de l'écoulement, et
- au moins un silencieux (40) est disposé au niveau du générateur (10), **caractérisé en ce que**
- l'au moins un silencieux (40) est disposé au niveau de l'au moins un canal de sortie d'air (14), dans lequel l'au moins un silencieux (40) s'étend à travers l'au moins un canal de sortie d'air (14), et
- l'au moins un silencieux (40) présente un silencieux tubulaire (40) et/ou un silencieux à coulisse (40).

2. Générateur (2) selon la revendication précédente 1, dans lequel
l'au moins un silencieux (40) est disposé de manière détachable au niveau du générateur (10).

3. Générateur (10) selon l'une quelconque des revendications précédentes 1 à 2, dans lequel
l'au moins un silencieux (40) s'étend au-delà du côté extérieur (13).

4. Générateur (10) selon l'une quelconque des revendications précédentes 1 à 3, dans lequel l'au moins un silencieux (40) présente des éléments insonorisants.

5. Générateur (10) selon l'une quelconque des revendications précédentes 1 à 4, présentant une unité d'arrêt (50).

6. Générateur (10) selon la revendication précédente 5, dans lequel
l'unité d'arrêt (50) est modifiable entre une position ouverte et une position de blocage différente de la position ouverte.

7. Générateur (10) selon l'une quelconque des revendications précédentes 5 ou 6, dans lequel
l'unité d'arrêt (50) est un volet de jalousie ou un volet tubulaire.

8. Générateur (10) selon l'une quelconque des revendications précédentes 1 à 7, dans lequel
l'au moins un canal de sortie d'air (14) est de forme cylindrique ou polygonale.

9. Générateur (10) selon l'une quelconque des revendications précédentes 1 à 8, présentant une chambre de pression (26) qui est reliée à l'au moins à un canal de sortie d'air (14) sur le plan de l'écoulement.

10. Générateur (10) selon l'une quelconque des revendications précédentes 1 à 9, présentant au moins un dispositif d'acheminement d'air (60) qui est relié à l'au moins à un canal de sortie d'air (14) sur le plan de l'écoulement,
dans lequel de préférence, l'au moins un dispositif d'acheminement d'air (60) est relié à l'au moins un canal de sortie d'air (14) par la chambre de pression (26) sur le plan de l'écoulement.

11. Générateur (10) selon l'une quelconque des revendications précédentes 1 à 10, présentant au moins un canal d'entrée d'air (15) qui s'étend entre le côté intérieur (12) et le côté extérieur (13), dans lequel l'au moins un canal d'entrée d'air (15) relie l'espace intérieur (16) du générateur à l'environnement (E) sur le plan de l'écoulement.

12. Générateur (10) selon l'une quelconque des revendications précédentes 1 à 11, présentant
- deux côtés frontaux (17, 18), entre lesquels s'étend l'espace intérieur (16) du générateur (10) dans une direction axiale (A), dans lequel
• l'au moins un canal de sortie d'air (14) est disposé au niveau de l'un des deux côtés frontaux (17, 18) du générateur,
dans lequel de préférence, l'au moins un canal de sortie d'air (14) est disposé au niveau du côté frontal (17, 18) du générateur (10) qui, dans l'état de fonctionnement du générateur (10), est le côté frontal (17) opposé au vent (W),
et/ou
• l'au moins un canal d'entrée d'air (15) est disposé au niveau de l'un des deux côtés frontaux (17, 18) du générateur (10),
dans lequel en particulier, l'au moins un canal d'entrée d'air (15) est disposé au niveau du côté frontal (17, 18) du générateur qui, dans un état de fonctionnement du générateur (10), est le côté frontal (17) opposé au vent (W).

13. Générateur (10) selon l'une quelconque des revendications précédentes 1 à 12, présentant
- un canal d'amenée d'air (19) et une chambre d'évacuation d'air (27), en particulier deux chambres d'évacuation d'air ou plus, reliée au conduit d'amenée d'air (19) en amont sur le plan de l'écoulement,
- un rotor (30) avec une unité active de rotor (36) et un stator (20) avec une unité active de stator (25), dans lequel
- l'unité active de rotor (36) et l'unité active de stator (25) sont disposées espacées l'une de l'autre par un entrefer (S), par lequel la chambre d'évacuation d'air (27) est reliée au canal d'amenée d'air (19) en amont sur le plan de l'écoulement,
- dans lequel de préférence, le dispositif d'acheminement d'air (60) est disposé en aval de la chambre d'évacuation d'air (27), lequel est conçu pour refroidir l'unité active de rotor (36) et l'unité active de stator (25), dans lequel le dispositif d'acheminement d'air (60) pour refroidir l'unité active de rotor (36) et l'unité active de stator (25)
• amène de l'air de refroidissement (C) à travers le canal d'amenée d'air (19) jusqu'à l'entrefer (S), et
• évacue de l'entrefer l'air de refroidissement (H) chauffé par l'unité active de rotor (36) et l'unité active de stator (25) à travers la chambre d'évacuation d'air (27),
- dans lequel en particulier le canal d'amenée d'air (19) est relié à l'au moins un canal d'entrée d'air (15) sur le plan de l'écoulement.

14. Éolienne, présentant un générateur (10) selon l'une quelconque des revendications précédentes 1 à 13.
